# EUROPÄISCHE PATENTSCHRIFT

(11) **EP 1 176 330 B1**
(45) Veröffentlichungstag und Bekanntmachung des Hinweises auf die Patenterteilung: **17.05.2006**
(21) Anmeldenummer: 01117860.5
(22) Anmeldetag: 23.07.2001
(51) Int. Cl.: F16D 66/02

(54) **Überwachungsvorrichtung für eine Sattelscheibenbremse**
Monitoring device for caliper disc brake
Dispositif de surveillance pour frein à disque à étrier

(30) Priorität: 25.07.2000 DE 10036109
(43) Veröffentlichungstag der Anmeldung: 30.01.2002
(73) Patentinhaber: Wabco Radbremsen GmbH, 68229 Mannheim (DE); WABCO GmbH & CO. OHG, 30453 Hannover (DE)
(72) Erfinder: Antony, Paul, 67550 Worms (DE); Feldmann, Joachim, 31535 Neustadt (DE); Frank, Dieter, 30171 Hannover (DE)
(74) Vertreter: Leinweber & Zimmermann

(56) Entgegenhaltungen:
- EP-A- 0 093 657
- EP-A- 0 567 155
- DE-C- 4 213 581
- US-A- 4 850 454

## Beschreibung

Die Erfindung betrifft eine Überwachungsvorrichtung für eine Sattelscheibenbremse, wobei
die Sattelscheibenbremse ein erstes, ein zweites und ein drittes Bremsenelement aufweist, die relativ zueinander verschieblich gehalten sind, und
die Überwachungseinrichtung
einen ersten Sensor, der zum Erfassen einer Relativposition zwischen dem ersten und dem zweiten Bremsenelement dient, und
einen zweiten Sensor aufweist, der zum Erfassen einer Relativposition zwischen dem ersten und dem dritten Bremsenelement dient.

Überwachungsvorrichtungen der oben genannten Art sind bekannt, beispielsweise aus der EP-A-567 155 und der DE-C-42 13 581.

Bei den bekannten Überwachungsvorrichtungen sind die beiden Sensoren räumlich voneinander getrennt angeordnet. Durch Vergleich (beispielsweise Differenzbildung) der ermittelten Sensorwerte lassen sich Verschleißgrößen getrennt für jeden Bremsbelag einzeln darstellen.

Die voneinander getrennte Anordnung der beiden Sensoren führt bei bestimmten Bremsengeometrien zu Problemen. Insbesondere erfordert jeder Anwendungsfall einen speziellen Aufbau der Einzelsensoren. Darüber hinaus müssen beide Sensoren einzeln in die Bremse eingebaut werden, wodurch der Montageaufwand entsprechend erhöht ist. Auch ist der Umfang der möglichen Aussagen über den Zustand der Bremse bei der Überwachungsvorrichtung nach dem Stand der Technik begrenzt. Da die Sensoren darüber hinaus in eigens dafür vorgesehenen Ausnehmungen in der Bremse angeordnet sind, können sie nicht nachträglich eingebaut werden. Vielmehr mußte die Bremse von vornherein entsprechend ausgelegt sein.

Der Erfindung stellt sich daher die Aufgabe, die Überwachungsvorrichtung der eingangs genannten Art insofem zu verbessern, als sie kompakter in ihrem Aufbau und vielseitiger im Hinblick auf ihre Anordnung innerhalb des Bremsensystems sein soll, wobei gleichzeitig angestrebt wird, dass die mittels der Überwachungsvorrichtung erhaltenen Informationen über den Zustand und die Funktion der Bremse umfangreicher und flexibler (variabler) sind.

Erfindungsgemäß wird die Aufgabe bei einer Überwachungsvorrichtung der eingangs genannten Art durch eine Sensor-Referenzeinrichtung gelöst, die mit dem ersten Bremsenelement gekoppelt ist und als Referenz für die Relativpositionserfassung sowohl des ersten als auch des zweiten Sensors dient.

Mit anderen Worten werden die beiden Sensoren zu einem gewissen Grade zusammengefasst, indem sie mit einer gemeinsamen Referenz arbeiten. Der daraus resultierende modulare Aufbau führt zu einer erheblichen Vereinfachung bei der Montage, weil nicht mehr zwei komplett voneinander getrennte Sensoren eingebaut werden müssen. Das mithin erfindungsgemäß vorgesehene Sensormodul führt zu einer Vielseitigkeit bei der Anordnung in dem Bremsensystem, weil nicht mehr zwei getrennte Referenzpunkte innerhalb des Bremsensystems gesucht werden müssen, die für die Sensierung geeignet sind. Da beide Sensoren mit ein und derselben Referenz arbeiten, sind Summen- und Differenzbildungen der sensierten Werte genauer als bei der Verwendung zweier unterschiedlicher Referenzen, weil bei der Verwendung unterschiedlicher Referenzen Relativbewegungen zwischen den beiden Referenzen den Summen- bzw. Differenzwert verfälschen könnten. Durch diese Steigerung der Genauigkeit ergeben sich zusätzliche Einsatzmöglichkeiten für die Überwachungsvorrichtung, die vorher wegen mangelnder Verlässlichkeit des Überwachungsergebnisses nicht gegeben waren.

Erfindungsgemäß ist bevorzugt vorgesehen, dass die Sattelscheibenbremse eine Gleitsattelscheibenbremse ist und das erste Element
aa) ein Gleitsattel, ab) ein Bremsenträger oder ac) ein Zuspannelement ist,
das zweite Bremsenelement ba) der Bremsenträger, bb) das Zuspannelement oder bc) der Gleitsattel ist und
das dritte Bremsenelement ca) das Zuspannelement, cb) der Gleitsattel oder cc) der Bremsenträger ist.

Mit anderen Worten ist nach der Erfindung bevorzugt vorgesehen, dass beim Einsatz der Überwachungsvorrichtung in einer Gleitsattelscheibenbremse die Relativverschiebungen des Gleitsattels, des Bremsenträgers und des Zuspannelements zueinander erfasst werden, wobei es gleichgültig ist, mit welchem der drei genannten Elemente die Sensor-Referenzeinrichtung gekoppelt ist. Dadurch ergibt sich eine erhebliche Flexibilität bei dem Einbau in die Bremse. Es muss nur nach freier Wahl der Kopplung der Sensor-Referenzeinrichtung mit einem der drei genannten Elemente dafür gesorgt werden, dass die beiden Sensoren jeweils so ausgelegt und angeordnet sind, dass sie jeweils die Relativposition zu einem der beiden verbleibenden Bremsenelemente sensieren.

Wie oben im einzelnen erläutert, bedient sich die Erfindung bevorzugt dreier Fixpunkte auf drei unterschiedlichen und gegeneinander verschieblichen Bremsenelementen innerhalb der Bremse, wobei es gleichgültig ist, mit welchem Fixpunkt als Referenz für die beiden Sensoren gearbeitet wird. Dadurch ist maximale Flexibilität bei der Auslegung und beim Einbau erreicht.

Alternativ ist bevorzugt nach der Erfindung vorgesehen, dass beim Einsatz der Überwachungsvorrichtung in einer Festsattelscheibenbremse
das erste Bremsenelement aa) ein Festsattel oder ein Bremsenträger, ab) ein erstes Zuspannelement oder ac) ein zweites Zuspannelement ist,
das zweite Bremsenelement ba) das erste Zuspannelement, bb) der Festsattel oder der Bremsenträger oder bc) das zweite Zuspannelement ist und
das dritte Bremsenelement ca) das zweite Zuspannelement, cb) das erste Zuspannelement oder cc) der Festsattel oder der Bremsenträger ist.

Wie schon im Fall des Einsatzes in einer Gleitsattelscheibenbremse werden wieder drei Fixpunkte ausgesucht, wobei die Sensor-Referenzeinrichtung mit einem der Fixpunkte gekoppelt ist und wobei es gleichgültig ist, welcher der Fixpunkte für die Kopplung mit der Sensor-Referenzeinrichtung ausgesucht wird. Mithin ergeben sich die gleichen Vorteile wie im Falle des Einsatzes der erfindungsgemäßen Überwachungsvorrichtung bei einer Gleitsattelscheibenbremse.

Erfindungsgemäß ist bevorzugt vorgesehen, dass die Sensor-Referenzeinrichtung außerhalb des Kraftflusses bei der Betätigung der Bremse liegt. Da mithin die Zuspannkraft in diesem Fall die Sensor-Referenzeinrichtung in keiner Weise beeinflusst, hat sie auch keine Auswirkungen auf die Genauigkeit des Sensierungsergebnisses.

Bevorzugt ist die Sensor-Referenzeinrichtung ein gesondertes Bauteil. Dadurch ergibt sich insbesondere der Vorteil, dass die Überwachungsvorrichtung - bevorzugt als Modul ausgelegt - nachträglich in die Bremse eingebaut werden kann.

Weiter bevorzugt weist die Sensor-Referenzeinrichtung ein Gehäuse auf. Dadurch kann sie vor Außeneinflüssen, insbesondere vor Verschmutzung und Feuchtigkeit geschützt werden.

Bevorzugt ist vorgesehen eine erste Kopplungseinrichtung zum Koppeln des ersten Sensors mit dem zweiten Bremsenelement. Diese erste Kopplungseinrichtung kann dazu dienen, einen größeren Abstand zwischen dem ersten Sensor und dem zweiten Bremsenelement zu überbrücken, so dass der erste Sensor nicht in unmittelbarer Nähe des zweiten Bremsenelements angeordnet werden muss. Dadurch ergibt sich eine entsprechende Erhöhung der Flexibilität bei der Auslegung und dem Einbau der erfindungsgemäßen Überwachungsvorrichtung.

Aus den gleichen Gründen kann erfindungsgemäß bevorzugt eine zweite Kopplungseinrichtung zum Koppeln des zweiten Sensors mit dem dritten Bremsenelement vorgesehen sein.

Erfindungsgemäß weiter bevorzugt kommen als Kopplungseinrichtungen insbesondere Arme in Betracht. Solche Arme können beliebig geformt sein und mithin besonders flexibel den jeweiligen geometrischen Gegebenheiten in der Bremse angepasst werden.

Dabei sind bevorzugt die erste und die zweite Kopplungseinrichtung von je einem Arm gebildet, wobei weiter die Arme zumindest abschnittsweise nebeneinanderliegend angeordnet oder ineinandergesteckt sind. Durch diese Anordnung nehmen die Arme und damit das gesamte Sensormodul besonders wenig Bauraum ein, wodurch es wiederum flexibler eingesetzt werden kann.

Prinzipiell kann der erste Sensor von beliebiger Art sein. Bevorzugt handelt es sich jedoch bei dem ersten Sensor um einen Zugsensor, einen Drucksensor, einen Verschiebewegsensor oder einen Schalter. Er kann elektrisch, elektromechanisch, elektronisch, magnetisch und/oder optisch arbeiten.

Das gleiche gilt für den zweiten Sensor.

Erfindungsgemäß bevorzugt ist eine Auswerteeinrichtung vorgesehen, die auf der Grundlage von Ausgangssignalen des ersten und/oder des zweiten Sensors mindestens eine Information über den Zustand der Sattelscheibenbremse zur Verfügung stellt.

Dabei kann die Information erfindungsgemäß bevorzugt den Grad des Verschleißes eines Bremsbelages, den Grad des addierten Verschleißes von zwei oder mehr Bremsbelägen, das Erreichen oder Nicht-Erreichen eines Grenzwertes, den Grad des Gleichlaufs von Bremsenelementen, die Funktion einer Nachstelleinrichtung, die Verschieblichkeit des Gleitsattels, die Funktion einer Betätigungseinrichtung, die Funktion eines Betätigungszylinders und/oder die Dicke einer Bremsscheibe betreffen.

Darüber hinaus kann eine Anzeigeeinrichtung zum Anzeigen der von der Auswerteeinrichtung zur Verfügung gestellten Information(en) vorgesehen sein.

Auch die Auswerteeinrichtung kann erfindungsgemäß in dem Gehäuse angeordnet sein, um sie vor Ausseneinflüssen wie etwa Schmutz und Feuchtigkeit zu schützen.

Im folgenden ist die Erfindung anhand bevorzugter Ausführungsbeispiele unter Bezugnahme auf die beiliegende Zeichnung mit weiteren Einzelheiten näher erläutert. Dabei zeigen
- die Fig. 1 bis 3: jeweils eine schematische Darstellung eines Ausführungsbeispiels der erfindungsgemäßen Überwachungsvorrichtung,
- Fig. 4: eine Variante des Ausführungsbeispiels nach Fig. 1,
- Fig. 5: schematisch ein Sensorgehäuse, wie es bei den Ausführungsbeispielen nach den Fig. 1 bis 4 verwendet werden kann und

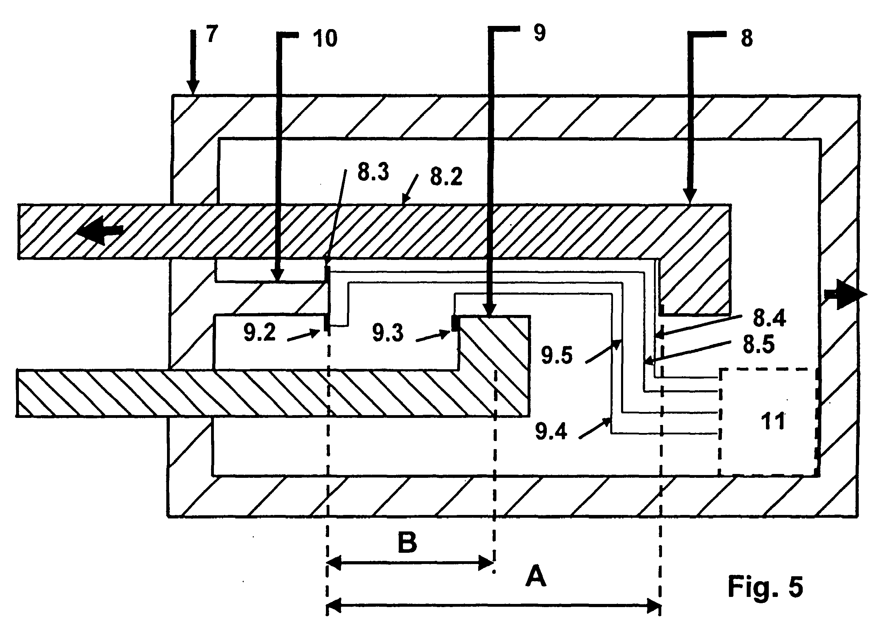

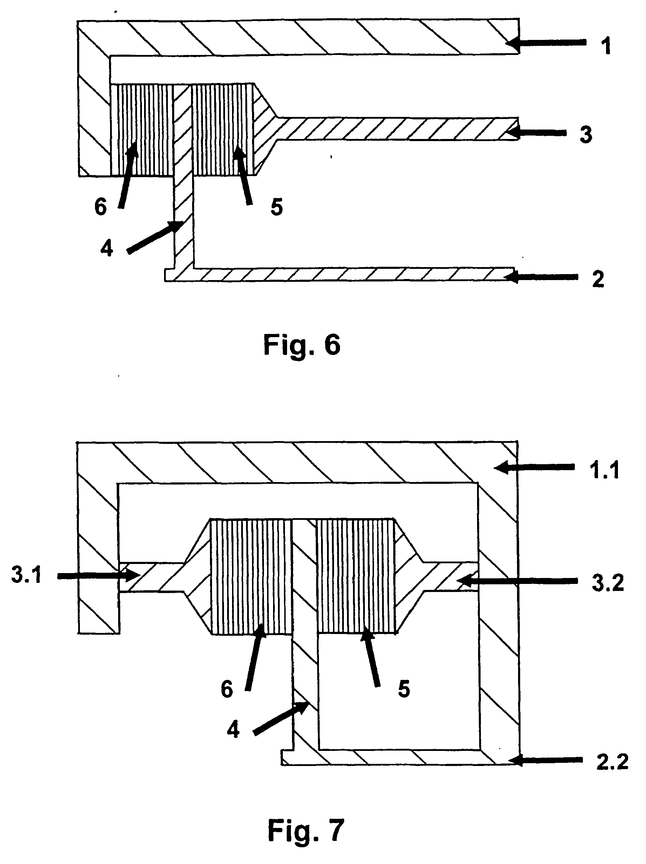

- die Fig. 5 und 6: Prinzipskizzen einer Gleitsattelscheibenbremse einerseits und einer Festsattelscheibenbremse andererseits.

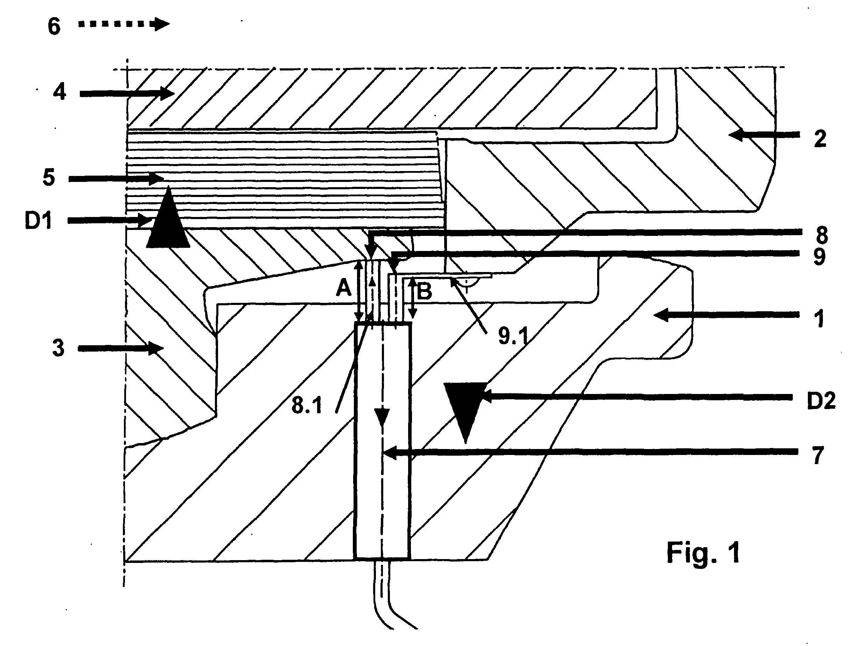

Fig. 1 zeigt eine Gleitsattelscheibenbremse mit einem Gleitsattel 1, der gegenüber einem Bremsenträger 2 verschiebbar ist. Bei Zuspannung der Bremse mittels eines Zuspannelements 3 werden gegen eine Bremsscheibe 4 zwei Bremsbacken 5 und 6 gedrückt. Die Bremsbacke 6 ist in Fig. 1 nicht gezeigt. Sie ist auf der der Bremsbacke 5 entgegengesetzten Seite der Bremsscheibe 4 angebracht, wobei der Gleitsattel 1 die Bremsscheibe 4 übergreift.

In einem Sensorgehäuse 7 sind zwei Sensoren 8, 9 angeordnet. Das Sensorgehäuse 7 ist bei dem Ausführungsbeispiel nach Fig. 1 an dem Gleitsattel 1 fest angebracht. Sie weisen Arme 8.1, 9.1 auf. Der Arm 8.1 koppelt den Sensor 8 mit dem Zuspannelement 3. Der Arm 9.1 koppelt den Sensor 9 mit dem Bremsenträger 2.

Fig. 1 zeigt deutlich, dass der Sensor 9 in der Zeichnung bezüglich des Bremsenträgers 2 versetzt angeordnet und dennoch mit dem Bremsenträger 2 gekoppelt sein kann, weil dazu der Arm 9.1 eingesetzt ist. Insbesondere durch die Verwendung eines solchen Arms kann also der Anbringungsort des Sensorgehäuses 7 mit dem Sensor 9 nahezu beliebig sein, wobei immer noch eine Kopplung mit dem Bremsenträger 2 über den Arm 9.1 möglich ist.

Die beiden Dreiecke D1 und D2 deuten die Kraftrichtung beim Zuspannen der Bremse an. Beim Zuspannen wird nämlich der Sattel 1 nach unten gedrängt, wodurch der Bremsbelag 6 nach unten gegen die Bremsscheibe 4 gedrückt wird, wohingegen der Bremsbelag 5 nach oben gegen die Bremsscheibe 4 gedrückt wird.

Mithin bewegen sich insbesondere drei Bremsenelemente gegeneinander: Während nämlich der Bremsenträger 2 stationär gehalten wird, bewegt sich der Bremssattel 1 in der Fig. 1 nach unten, und bewegt sich das Zuspannelement 3 in Fig. 1 nach oben. Diese beiden Relativbewegungen des Bremssattels 1 einerseits und des Zuspannelements 2 andererseits bezüglich des Bremsenträgers 2 andererseits wird von den Sensoren 8 und 9 erfaßt.

Mit anderen Worten liegt eine "Dreipunktfixierung" vor. Es ist nämlich eines der drei Hauptelemente der Überwachungsvorrichtung, nämlich das Sensorgehäuse 7, das als gemeinsame Sensor-Referenzeinrichtung dient, mit einem von drei gegeneinander verschieblichen Bremsenelementen gekoppelt, in diesem Fall an dem Gleitsattel 1 gehalten, wodurch es als erster Fixpunkt dient, wohingegen die beiden anderen Teile der Überwachungsvorrichtung als zweiter bzw. dritter Fixpunkt über die Arme 8.1 und 9.1 mit den beiden anderen Bremsenelementen, in diesem Fall dem Bremsenträger 2 bzw. dem Zuspannelement 3 gekoppelt sind.

Das Sensorgehäuse 7 mit den Sensoren 8 und 9 kann auch als Sensormodul bezeichnet werden. Es bietet insbesondere den Vorteil, dass es kompakt in der Ausführung ist, weil es alle bisher getrennt voneinander angeordneten Einzelsensoren in sich vereint. Mit anderen Worten kann der An- und Einbau der bisherigen Einzelsensoren entfallen, was nicht nur den speziell hierfür erforderlichen Herstellungsaufwand in der Bremse, sondern auch die Störanfälligkeit reduziert, weil nicht mehr als Einzelsysteme anzusehende Einzelsensoren verwendet werden.

Es sei festgestellt, dass nach der Erfindung zur Erfassung unterschiedlicher Relativpositionen dienende Sensoren baulich zu einem kombinierten Meßwertsensorensystem in einem Gehäuse 7 zusammengefaßt sind.

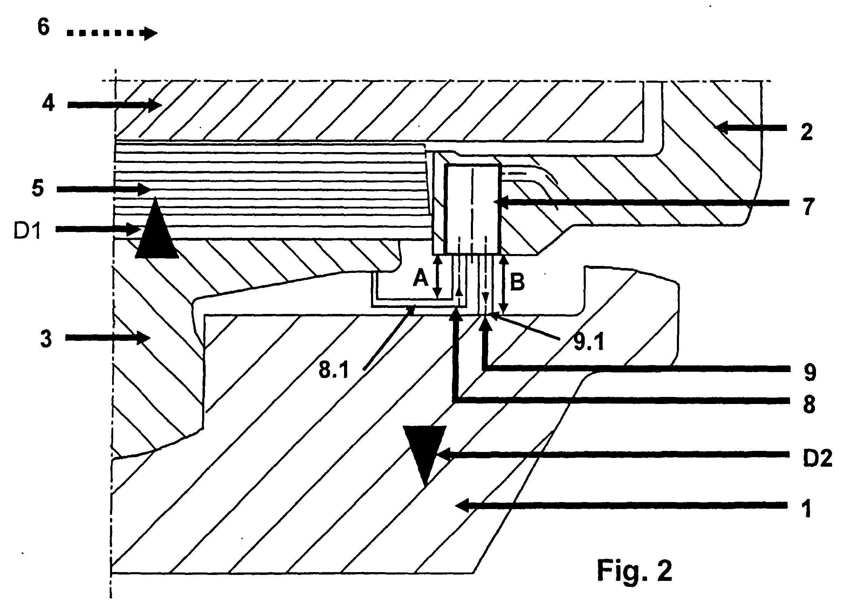

Die Ausgestaltung nach der Fig. 2 folgt dem gleichen Prinzip wie diejenige nach der Fig. 1, allerdings mit dem Unterschied, dass hier das Sensorgehäuse 7 an dem Bremsenträger 2 befestigt ist und die Arme 8.1 und 9.1 zur Kopplung mit dem Zuspannelement 3 einerseits und dem Gleitsattel 1 andererseits dienen. Es liegt also wiederum eine "Dreipunktfixierung" vor, jedoch mit gegenüber der Ausführung nach Fig. 1 vertauschten Rollen.

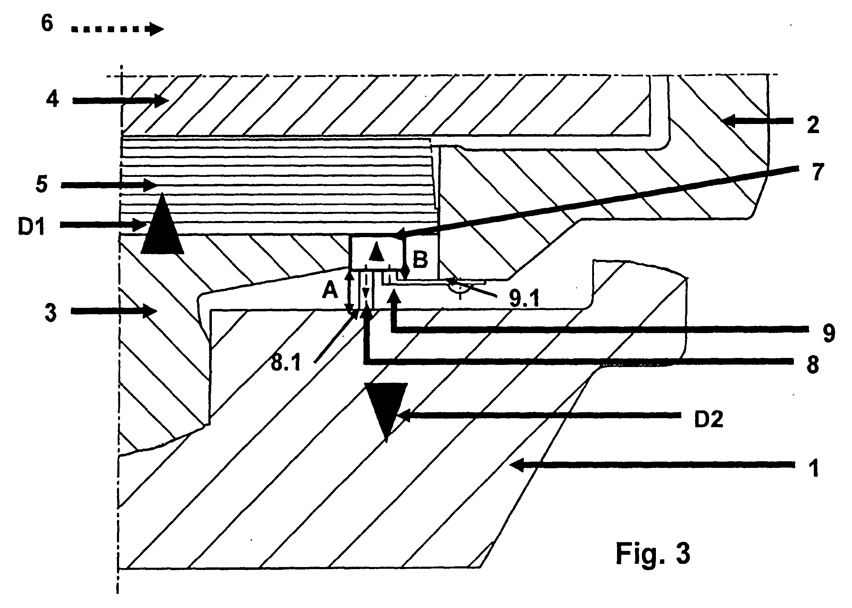

Das gleiche gilt, mutatis mutandis, für die Ausführungsform nach Fig. 3. Hier ist nun das Sensorgehäuse 7 an der Zuspanneinheit 3 angebracht, wobei die Arme 8.1 und 9.1 zur Kopplung mit dem Gleitsattel 1 einerseits und dem Bremsenträger 2 andererseits dienen.

An dieser Stelle sei ausdrücklich darauf hingewiesen, dass einer der Fixpunkte, und zwar derjenige, der bei den Ausführungen nach den Fig. 1, 2 und 3 im Zusammenhang mit dem Zuspannelement 3 steht, auch an den Bremsbelag 5 direkt angeordnet sein kann. Ähnliches gilt auch für die Position des Sensorgehäuses 7 selbst mit dem ersten Fixpunkt an dem Bremsenträger 2 (Drehung um 180°). Dementsprechend bewegen sich die Sensoren 8, 9 entweder ein- oder auswärts gegenüber dem Sensorgehäuse 7.

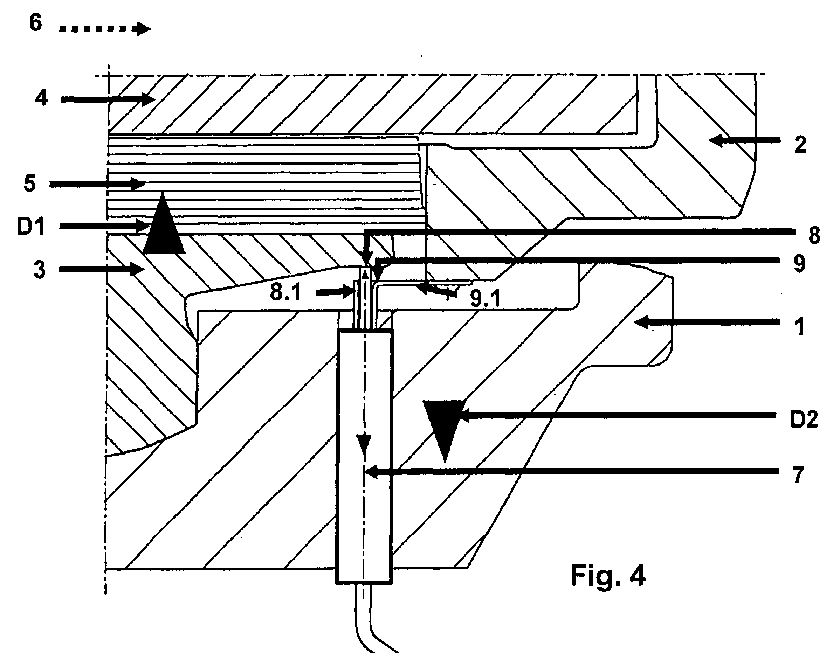

Die Ausgestaltung nach der Fig. 4 unterscheidet sich von derjenigen nach Fig. 1 nur dadurch, dass die beiden Arme 8.1 und 9.1 nicht mehr parallel nebeneinanderliegend ausgeführt sind. Bei der Ausgestaltung nach der Fig. 4 erstreckt sich nämlich der Arm 8.1 teleskopartig durch den Arm 9.1 hindurch. Die beiden Arme liegen mithin koaxial zueinander.

Hieraus ist schon erkennbar, wie variabel die Anordnung des Sensorgehäuses 7 mit den beiden Sensoren 8, 9 und den beiden Armen 8.1 und 9.1 entsprechend den jeweiligen besonderen Gegebenheiten des Einzelfalls erfolgen kann.

Obwohl in den Fig. 1 bis 4 nur eine Reibpaarung - bestehend aus einer Bremsscheibe 4 mit zwei Bremsbacken 5, 6 - abgebildet ist, gilt die Ausführung und Anordnung des Sensormoduls auch für Mehrscheiben- wie auch für Vollscheibenbremsen, weil dort gleichfalls Relativbewegungen stattfinden, die mit diesem Modul erfaßt werden können.

Fig. 5 zeigt schematisch den Aufbau des Sensormoduls, wie es beispielsweise bei dem Ausführungsbeispiel nach Fig. 1 verwendet wird. Dabei ist ein Widerstandselement 8.2 vorgesehen, das bezüglich eines Abgriffs 8.3 verschieblich ist. Der Abgriff 8.3 ist dabei an einem Anschlag 10 angebracht. Sowohl das Widerstandselement 8.2 als auch der Abgriff 8.3 sind über elektrische Leitungen 8.4 und 8.5 mit einer Auswertschaltung 11 verbunden. Der mit dem so aufgebauten Potentiometer erfaßte Verschiebeweg A entspricht der Summe der Verschiebungen des Gleitsattels 1 einerseits und des Zuspannelementes 3 andererseits bezüglich der Bremsscheibe 4 und damit dem aufsummierten Verschleiß der beiden Bremsbacken 5 und 6.

In gleicher Weise könnte der Sensor 9 als Potentiometer ausgebildet sein. Der von dem Sensor 9 gemessene Verschiebeweg wäre dann ein Maß für den Verschleiß der Bremsbacke 5. Die Differenz der Verschiebewege A und B wäre ein Maß für den Verschleiß der Bremsbacke 6.

In Fig. 5 ist aber der Sensor 9 nicht als Potentiometer ausgebildet, sondern in Form eines Schalters. Dazu sind zwei Kontakte 9.2 und 9.3 vorgesehen, die über Leitungen 9.4 und 9.5 mit der Auswerteschaltung 11 verbunden sind. Dadurch ist mittels des Sensors 9 eine Grenzwertermittlung möglich. Sie erfolgt zusätzlich zu der oben beschriebenen Wegsensierung mit dem Sensor 8. Da mithin auf die Einzelsensierung der Strecke B verzichtet wird, erfolgt nur die Erfassung des Summenweges A und eine Grenzwertermittlung. Mit dieser Ausgestaltung kann unter der Voraussetzung gleicher Relativbewegungen der Elemente 8 und 9 gegenüber dem Element 10 der Gleichlauf der Bremsenteile kontrolliert bzw. eine Fehlfunktion angezeigt werden. Fehlfunktionen liegen vor, wenn eines der beiden Teile 8, 9 vorzeitig mit dem Anschlag 10 kontaktiert.

Darüber hinaus erlaubt die Ausgestaltung nach Fig. 5 die Erfassung des Summenverschleißes der beiden Bremsbacken 5 und 6 sowie eine Warnung, sobald die üblicherweise dem größeren Verschleiß ausgesetzte Bremsbacke 5 die Grenze des zulässigen Verschleißes erreicht hat.

In der Auswerteschaltung 11 werden die eingehenden Meßwerte ausgewertet, beispielsweise durch Vergleich von Ist- mit Soll-Größen. Das Auswerteergebnis wird an eine nicht gezeigte Anzeigeeinrichtung weitergegeben. Dabei kann es sich beispielsweise um eine analoge oder digitale Anzeige des Verschleißgrades handeln. Darüber hinaus kann aber auch, insbesondere im Fall der Grenzwertermittlung, ein Alarmgeber angesteuert werden, beispielsweise eine rote Lampe.

Es wird ausdrücklich darauf hingewiesen, dass der innere Aufbau des Sensors nach Fig. 5 nur ein Beispiel für viele verschiedene Möglichkeiten ist. Dies gilt insbesondere für die Abgriffmöglichkeiten der Relativbewegungen. Dies kann elektromechanisch, rein elektronisch, zug-/drucktechnisch durch Leiterbahnen, Widerstände, Schalter etc. erfolgen. Die Sensierung durch Oder-Verknüpfungen in beliebiger Art ist möglich, wenn aus Kosten- oder Herstellungsgründen der innere Aufbau des Sensorgehäuses 7 die eine Erfassungsmöglichkeit mit der anderen verknüpft, um daraus letztendlich Rückschlüsse über den Zustand der Bremse zu gewinnen. Mit anderen Worten kann die Wertermittlung kontinuierlich, schrittweise und/oder grenzwertmäßig erfolgen.

Die ermittelten Zustandsgrößen dienen nicht nur der unmittelbaren Verschleißerfassung, sondern die ermittelten Werte können auch Aufschluß über die eigentliche Funktion der Bremse geben. Dies kann beispielsweise die Kontrollfunktion für die Nachstellvorrichtung, die Gleitfunktion des Bremssattels 1 gegenüber dem Bremsenträger 2, die Hubfunktion der Betätigungseinrichtung bzw. eines Betätigungszylinders, aber auch die Ermittlung der Bremsscheibendicke etc. sein.

Fig. 6 zeigt schematisch den Aufbau einer Gleitsattelscheibenbremse mit den oben im einzelnen näher dargestellten Bremsenelementen 1 (Gleitsattel), 2 (Bremsenträger) und 3 (Zuspannelement) sowie mit den Bremsbacken 5 und 6 und der Bremsscheibe 4. Wie im einzelnen oben weiter erläutert ist erfindungsgemäß eine Dreipunktfixierung bezüglich der Bremsenelemente 1, 2 und 3 vorgesehen.

Demgegenüber zeigt Fig. 7 eine prinzipielle Darstellung einer Festsattelscheibenbremse. Es sind die gleichen Bezugszahlen wie in Fig. 6 verwendet. Die Bezugszahl 1.1 bezeichnet darüber hinaus den Festsattel. Die Bezugszahl 2.2 bezeichnet den Bremsenträger. Wird die Erfindung bei einer solchen Festsattelscheibenbremse angewendet, so liegen zwei der drei Fixpunkte auf den beiden Zuspannelementen 3.1 und 3.2, und ein dritter Fixpunkt liegt entweder auf dem Festsattel 1.1 oder auf dem Bremsenträger 2.2. Im übrigen gelten alle oben im Zusammenhang mit der Gleitsattelscheibenbremse gegebenen Erläuterungen im übertragenen Sinne auch für den Fall der Festsattelscheibenbremse.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in verschiedenen Ausführungsformen wesentlich sein.

## Patentansprüche

1. Überwachungsvorrichtung für eine Sattelscheibenbremse,
wobei die Sattelscheibenbremse ein erstes (1), ein zweites (2) und ein drittes (3) Bremsenelement aufweist, die relativ zueinander verschieblich gehalten sind und
die Überwachungseinrichtung
einen ersten Sensor (8), der zum Erfassen einer Relativposition zwischen dem ersten (1) und dem zweiten (2) Bremsenelement dient, und
einen zweiten Sensor (9) aufweist, der zum Erfassen einer Relativposition zwischen dem ersten (1) und dem dritten (3) Bremsenelement dient,
**gekennzeichnet durch**
eine Sensorreferenzeinrichtung (7, 10), die mit dem ersten Bremsenelement (1) gekoppelt ist und als Referenz für die Relativpositionserfassung sowohl des ersten (8) als auch des zweiten (9) Sensors dient.

2. Überwachungsvorrichtung nach Anspruch 1, **dadurch gekennzeichnet, dass**
die Sattelscheibenbremse eine Gleitsattelscheibenbremse ist und
das erste Bremsenelement
aa) ein Gleitsattel (1),
ab) ein Bremsenträger (2) oder
ac) ein Zuspannelement (3)
ist,
das zweite Bremsenelement
ba) der Bremsenträger (2),
bb) das Zuspannelement (3) oder
bc) der Gleitsattel (1)
ist und
das dritte Bremsenelement
ca) das Zuspannelement (3),
cb) der Gleitsattel (1) oder
cc) der Bremsenträger (2)
ist.

3. Überwachungsvorrichtung nach Anspruch 1, **dadurch gekennzeichnet, dass** die Sattelscheibenbremse eine Festsattelscheibenbremse ist und
das erste Bremsenelement
aa) ein Festsattel (1.1) oder ein Bremsenträger (2.2),
ab) ein erstes Zuspannelement (3.1) oder
ac) ein zweites Zuspannelement (3.2)
ist,
das zweite Bremsenelement
ba) das erste Zuspannelement (3.1),
bb) der Festsattel (1.1) oder der Bremsenträger (2.2) oder
bc) das zweite Zuspannelement (3.2)
ist und
das dritte Bremsenelement
ca) das zweite Zuspannelement (3.2)
cb) das erste Zuspannelement (3.1) oder
cc) der Festsattel (1.1) oder der Bremsenträger (2.2)
ist.

4. Überwachungsvorrichtung nach einem der vorangehenden Ansprüche, **dadurch gekennzeichnet, dass** die Sensorreferenzeinrichtung (7, 10) außerhalb des Kraftflusses bei der Betätigung der Bremse liegt.

5. Überwachungsvorrichtung nach einem der vorangehenden Ansprüche, **dadurch gekennzeichnet, dass** die Sensorreferenzeinrichtung (7, 10) ein gesondertes Bauteil ist.

6. Überwachungsvorrichtung nach einem der vorangehenden Ansprüche, **dadurch gekennzeichnet, dass** die Sensorreferenzeinrichtung (7, 10) ein Gehäuse (7) aufweist.

7. Überwachungsvorrichtung nach einem der vorangehenden Ansprüche, **gekennzeichnet durch** eine erste Kopplungseinrichtung (8.1) zum Koppeln des ersten Sensors (8) mit dem zweiten Bremsenelement (2).

8. Überwachungsvorrichtung nach einem der vorangehenden Ansprüche, **gekennzeichnet durch** eine zweite Kopplungseinrichtung (9.1) zum Koppeln des zweiten Sensors (9) mit dem dritten Bremsenelement (3).

9. Überwachungsvorrichtung nach Anspruch 7 oder 8, **dadurch gekennzeichnet, dass** die erste (8.1) oder die zweite (9.1) Kopplungseinrichtung von einem Arm gebildet ist/sind.

10. Überwachungsvorrichtung nach Anspruch 7 und 8, **dadurch gekennzeichnet, dass** die erste und die zweite Kopplungseinrichtung (8.1, 9.1) von je einem Arm gebildet sind und die Arme zumindest abschnittsweise nebeneinanderliegend angeordnet oder ineinander gesteckt sind.

11. Überwachungsvorrichtung nach einem der vorangehenden Ansprüche, **dadurch gekennzeichnet, dass** der erste Sensor (8) ein Zugsensor, ein Drucksensor, ein Verschiebewegsensor oder ein Schalter ist, und elektrisch, elektromechanisch, elektronisch, magnetisch und/oder optisch arbeitet.

12. Überwachungsvorrichtung nach einem der vorangehenden Ansprüche, **dadurch gekennzeichnet, dass** der zweite Sensor (9) ein Zugsensor, ein Drucksensor, ein Verschiebewegsensor oder ein Schalter ist, und elektrisch, elektromechanisch, elektronisch, magnetisch und/oder optisch arbeitet.

13. Überwachungsvorrichtung nach einem der vorangehenden Ansprüche, **gekennzeichnet durch** eine Auswerteeinrichtung (11), die auf der Grundlage von Ausgangssignalen des ersten und/oder des zweiten Sensors (8, 9) mindestens eine Information über den Zustand der Sattelscheibenbremse zur Verfügung stellt.

14. Überwachungsvorrichtung nach Anspruch 13, **dadurch gekennzeichnet, dass** die Information den Grad des Verschleißes eines Bremsbelages (5, 6), den Grad des addierten Verschleißes von zwei oder mehr Bremsbelägen (5, 6), das Erreichen oder Nichterreichen eines Grenzwertes, den Grad des Gleichlaufs von Bremsenelementen (2, 3), die Funktion einer Nachstelleinrichtung, die Verschieblichkeit eines Gleitsattels (1), die Funktion einer Betätigungseinrichtung (3), die Funktion eines Betätigungszylinders und/oder die Dicke einer Bremsscheibe (4) betrifft.

15. Überwachungsvorrichtung nach Anspruch 13 oder 14, **gekennzeichnet durch** eine Anzeigeeinrichtung zum Anzeigen der von der Auswerteeinrichtung (11) zur Verfügung gestellten Information(en).

16. Überwachungsvorrichtung nach einem der Ansprüche 13 bis 15, mittelbar oder unmittelbar zurückbezogen auf Anspruch 6, **dadurch gekennzeichnet, dass** die Auswerteeinrichtung (11) in dem Gehäuse (7) angeordnet ist.

## Claims

1. Monitoring device for a calliper disc brake whereby the calliper disc brake has a first (1), a second (2) and a third (3) brake element, which can be displaced relative to each other, and whereby the monitoring device has a first sensor (8), which serves to record a relative position between the first (1) and the second (2) brake element, and a second sensor (9), which serves to record a relative position between the first (1) and the third (3) brake element, **characterized by** a sensor-reference device (7, 10) that is connected to the first brake element (1) and serves as a reference for recording the relative position both of the first sensor (8) and the second sensor (9).

2. Monitoring device in accordance with claim 1, **characterized in that** the calliper disc brake is a sliding calliper disc brake and the first brake element is
aa) a sliding calliper (1),
ab) a brake bracket (2) or
cc) a clamping element (3),
and the second brake element is
ba) the brake bracket (2),
bb) the clamping element (3) or
bc) the sliding calliper (1)
and the third brake element is
ca) the clamping element (3),
cb) the sliding calliper (1) or
cc) the brake bracket (2)

3. Monitoring device in accordance with claim 1, **characterized in that** the calliper disc brake is a fixed calliper disc brake and the first brake element is
aa) a fixed calliper (1.1) or a brake bracket (2.2)
ab) a first clamping element (3.1) or
ac) a second tensioning element (3.2),
the second brake element is
ba) the first clamping element (3.1)
bb) the fixed calliper (1.1) or the brake bracket (2.2) or
bc) the second clamping element (3.2)
and the third brake element is
ca) the second clamping element (3.2)
cb) the first tensioning element (3.1) or
cc) the fixed calliper (1.1) or the brake bracket (2.2)

4. Monitoring device in accordance with one of the preceding claims, **characterized in that** the sensor reference device (7, 10) lies outside of the closed linkage when the brake is operated.

5. Monitoring device in accordance with one of the preceding claims, **characterized in that** the sensor reference device (7, 10) is a separate component.

6. Monitoring device in accordance with one of the preceding claims, **characterized in that** the sensor reference device (7, 10) has a housing (7).

7. Monitoring device in accordance with one of the preceding claims, **characterized by** a first coupling device (8.1) for coupling the first sensor (8) to the second brake element (2).

8. Monitoring device in accordance with one of the preceding claims, **characterized by** a second coupling device (9.1) for coupling the second sensors (9) to the third brake element (3).

9. Monitoring device in accordance with claim 7 or claim 8, **characterized in that** the first (8.1) or the second (9.1) coupling device is formed by an arm.

10. Monitoring device in accordance with claim 7 or claim 8, **characterized in that** the first and the second coupling device (8.1, 9.1) are each formed by an arm and the arms are disposed, at least partially, next to each other or are, at least partly, placed one inside the other.

11. Monitoring device in accordance with one of the preceding claims, **characterized in that** the first sensor (8) is a tensile sensor, a pressure sensor, a displacement sensor or a switch, and functions electrically, electromechanically, electronically, magnetically and/or optically.

12. Monitoring device in accordance with one of the preceding claims, **characterized in that** the second sensor (9) is a tensile sensor, a pressure sensor, a displacement sensor or a switch, and functions electrically, electromechanically, electronically, magnetically and/or optically.

13. Monitoring device in accordance with one of the preceding claims, **characterized by** an evaluation device (11) that makes available at least one piece of information data, on the state of the calliper disc brake, on the basis of output signals of the first and/or the second sensor (8, 9).

14. Monitoring device in accordance with claim 13, **characterized in that** the information item concerns the level of wearing of a brake lining (5, 6), the level of summed wearing of two or more brake linings (5, 6), the reaching or non-reaching of a threshold value, the level of synchronization of brake elements (2, 3), the functioning of an adjuster, the mobility of a sliding calliper (1), the functioning of an operating device (3), the functioning of an operating cylinder and/or the thickness of a brake disc (4).

15. Monitoring device in accordance with claim 13 or claim 14, **characterized by** a display device for showing the information provided by the evaluation device (11).

16. Monitoring device in accordance with one of claims 13 to 15, and indirectly or directly relating to claim 6, **characterized in that** the evaluation device (11) is disposed in a housing (7).

## Revendications

1. Dispositif de surveillance pour un frein à disque à étrier, où le frein à disque à étrier présente un premier (1), un deuxième (2) et un troisième (3) élément de frein, qui sont retenus d'une manière déplaçable les uns par rapport aux autres et
le dispositif de surveillance présente
un premier capteur (8) qui sert à détecter une position relative entre le premier (1) et le deuxième (2) élément de frein, et
un deuxième capteur (9), qui sert à détecter une position relative entre le premier (1) et le troisième (3) élément de frein,
**caractérisé par**
un dispositif de référence de capteur (7), 10) qui est couplé au premier élément de frein (1) et qui sert de référence pour la détection de la position relative à la fois du premier (8) et aussi du deuxième (9) capteur.

2. Dispositif de surveillance selon la revendication 1, **caractérisé en ce que** le frein à disque à étrier est un frein a disque à étrier coulissant et le premier élément de frein est
aa) un étrier coulissant (1),
ab) un support de frein (2) ou
c) un élément d'application (3),
le deuxième élément de frein est
ba) le support de frein (2),
bb) l'élément d'application (3) ou
bc) l'étrier coulissant (1), et
le troisième élément de frein est
ca) l'élément d'application (3),
cb) l'étrier coulissant (1) ou
cc) le support de frein (2).

3. Dispositif de surveillance selon la revendication 1, **caractérisé en ce que** le frein à disque à étrier est un frein à disque à étrier fixe et le premier élément de frein est
aa) un étriller fixe (1.1) ou à un support de frein (2.2),
ab) un premier élément d'application (3.1) ou
ac) un deuxième élément d'application (3.2),
le deuxième élément de frein est
ba) le premier élément d'application (3.1),
bb) l'étrier fixe (1.1) ou le support de frein (2.2) ou
bc) le deuxième élément d'application (3.2) et
le troisième élément de frein est
ca) le deuxième élément d'application (3.2)
cb) le premier élément d'application (3.1) ou
cc) l'étrier fixe (1.1) ou le support de frein (2.2).

4. Dispositif de surveillance selon l'une des revendications précédentes, **caractérisé en ce que** l'installation de référence de capteur (7, 10) se situe à l'extérieur du flux de force lors de l'actionnement du frein.

5. Dispositif de surveillance selon l'une des revendications précédentes, **caractérisé en ce que** l'installation de référence de capteur (7, 10) est un composant séparé.

6. Dispositif de surveillance selon l'une des revendications précédentes, **caractérisé en ce que** l'installation de référence de capteur (7, 10) présente un boîtier (7).

7. Dispositif de surveillance selon l'une des revendications précédentes, **caractérisé par** une première installation de couplage (8.1) pour le couplage du premier capteur (8) avec le deuxième élément de frein (2).

8. Dispositif de surveillance selon l'une des revendications précédentes, **caractérisé par** une deuxième installation de couplage (9.1) pour le couplage du deuxième capteur (9) avec le troisième élément de frein (3).

9. Dispositif de surveillance selon la revendication 7 ou 8, **caractérisé en ce que** la première (8.1) ou la deuxième (9.1) installation de couplage est/sont formées par un bras.

10. Dispositif de surveillance selon la revendication 7 et 8, **caractérisé en ce que** la première et la deuxième installation de couplage (8.1, 9.1) sont formées par respectivement un bras, et les bras sont disposés au moins par sections l'un à côté de l'autre ou sont emboîtés l'un dans l'autre.

11. Dispositif de surveillance selon l'une des revendications précédentes, **caractérisé en ce que** le premier capteur (8) est un capteur de traction, un capteur de pression, un capteur de déplacement ou un commutateur et fonctionne d'une manière électrique, électromécanique, électronique, magnétique et/ou optique.

12. Dispositif de surveillance selon l'une des revendications précédentes, **caractérisé en ce que** le deuxième capteur (9) est un capteur de traction, un capteur de pression, un capteur de déplacement ou un commutateur et fonctionne d'une manière électrique, électromécanique, électronique, magnétique et/ou optique.

13. Dispositif de surveillance selon l'une des revendications précédentes, **caractérisé par** une installation d'évaluation (11) qui, sur la base de signaux de sortie du premier et/ou deuxième capteur (8, 9) met à disposition au moins une information se rapportant à l'état du frein à disque à étrier.

14. Dispositif de surveillance selon la revendication 13, **caractérisé en ce que** l'information concerne le degré de l'usure de la garniture de frein (5, 6), le degré de l'usure additionné de deux ou plusieurs garnitures de frein (5, 6), l'atteinte ou la non-atteinte d'une valeur limite, le degré de la synchronisation d'éléments de frein (2, 3), la fonction d'une installation de rattrapage, l'aptitude au déplacement d'un étrier coulissant (1), la fonction d'une installation d'actionnement (3), la fonction d'un cylindre d'actionnement et/ou l'épaisseur d'un disque de frein (4).

15. Dispositif de surveillance selon la revendication 13 ou 14, **caractérisé par** une installation d'indication pour indiquer la ou les informations mises à disposition par l'unité d'évaluation (11).

16. Dispositif de surveillance selon l'une des revendications 13 à 15, se rapportant directement ou indirectement à la revendication 6, **caractérisé en ce que** l'installation d'évaluation (11) est disposée dans le boîtier (7).
